# EUROPEAN PATENT SPECIFICATION

(11) **EP 1 933 228 B1**
(45) Date of publication and mention of the grant of the patent: **11.08.2010**
(21) Application number: 07122569.2
(22) Date of filing: 07.12.2007
(51) Int. Cl.: G06F 3/041

(54) **Coordinate input apparatus**
Koordinateneingabevorrichtung
Appareil d'entrée de coordonnées

(30) Priority: 13.12.2006 JP 2006336029
(43) Date of publication of application: 18.06.2008
(73) Proprietor: Wacom Co., Ltd., Saitama-ken 349-1148 (JP)
(72) Inventor: Yamamoto, Sadao, Koshigaya-Shi Saitama 343-0026 (JP); Onoda, Naoto, Oamishirasato-machi Chiba 299-3241 (JP)
(74) Representative: Richardt, Markus Albert

(56) References cited:
- US-A1- 2004 104 899

## Description

### Field of the Invention:

The present invention relates to a coordinate input device suitable for use in a digitizer connected to a computer or the like.

### Related Background Art:

For example, a touch panel (pressure-sensitive sensor) corrects an input value and then obtains a corrected value to cope with the deterioration of a resistance film with time or the like (for example, see Japanese Unexamined Patent Application Publication No. H5-250086).

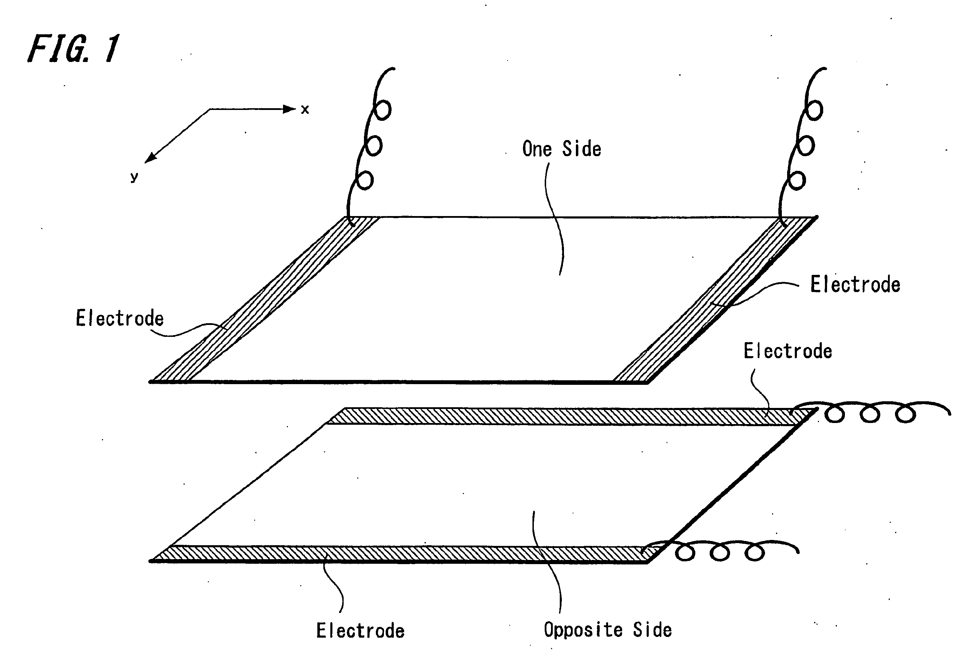

For example, as shown in FIG. 1, a four-wire touch panel has two sides made of any resistance films. One of the sides is provided with electrodes at both ends thereof in the direction of an X-axis and the other of the sides is provided with electrodes at both ends thereof in the direction of a Y-axis. Then, if the surface of the touch panel is pressed, the resistance films on both the sides are caused to contact with each other at a point (position) being pressed, thereby the point being detected.

Specifically, when the resistance films on both the sides contact with each other as described above, a predetermined voltage is applied between the electrodes at the both ends on one of the sides for a period in the contact state so as to detect a voltage between both the electrodes on the other side. In the subsequent period, a predetermined voltage is applied between the electrodes at the both ends on the other side so as to detect a voltage between both the electrodes on one side. From these detected voltages, an X-Y coordinate can be detected.

However, such configuration of the touch panel may cause variations of resistance value of a resistance film and correction may be then required for obtaining an input value. In addition, when using a touch panel in a typical method, input points being pressed tend to be unevenly distributed. Therefore, such aged deterioration as a resistance film being broken in the vicinity of the input points, may tend to occur. Hence, an input value is corrected to cope with the aging or the like of a resistance film, as disclosed in Japanese Unexamined Patent Application Publication No. H5-250086.

However, complicated signal processing may be required for such correction, so that the user should carry out a calibration operation. Therefore, a user in general may not carry out any calibration operation even if an error occurs in an input coordinate.

In contrast, for a five-wire or eight-wire coordinate input device, for example, a touch panel for automatically correcting an input coordinate by the device itself has been proposed. In this case, however, the configuration of the device and the production process thereof may become complicated because of an increase in the number of wires. Further, for correcting such input coordinate by the device itself, a complicated computing and so on may be required. Therefore, it has been also pointed out to be difficult in practice.

On the other hand, an input device, such as an electromagnetic induction sensor, which may not require any particular correction for obtaining an input value, has also been proposed (see, for example, Japanese Unexamined Patent Application Publication No. H5-298007).

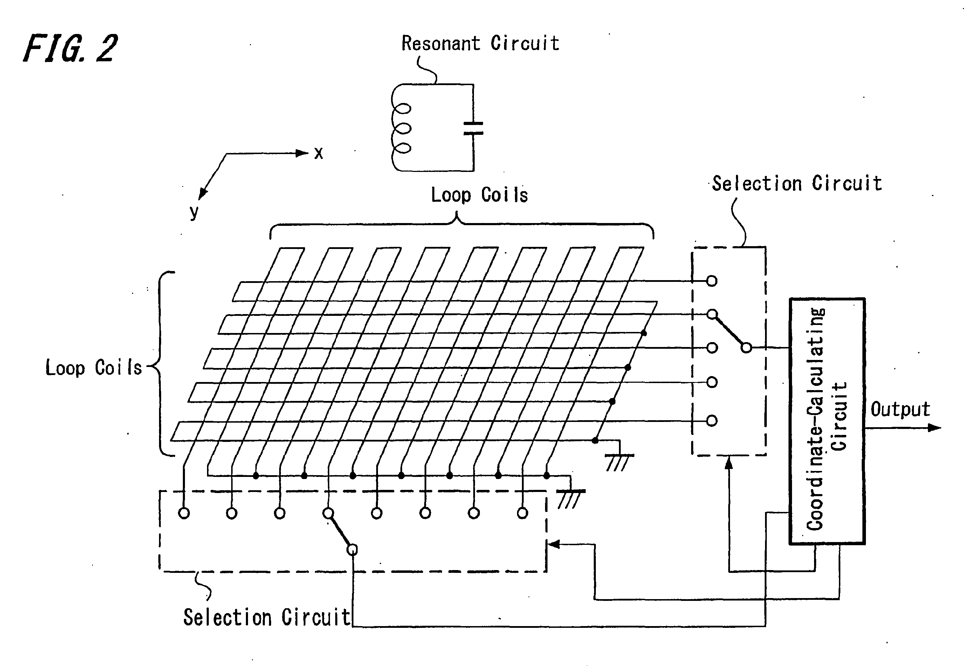

As shown in FIG. 2, for example, the electromagnetic sensor includes a plurality of loop coils being arranged in X and Y directions. When a position indicator approaches any of these loop coils, a resonant circuit incorporated in the position indicator resonates to compute an X-Y coordinate based on a resonance signal and the selected position of the loop coil. Consequently, a detailed input value (coordinate) without a need of correction can be obtained. However, for an input with such an electromagnetic induction system, a specific position indicator may be required. Thus, the input may not be carried out readily at any time.

Accordingly, another coordinate input device has been studied in which these sensors are combined and integrated to enable a variety of positional indication to be obtained.

However, even in the case of combining and integrating two different input devices, some of the aforementioned problems may remain.

That is, for example, when a touch panel (pressure-sensitive sensor) is used as a first input device, there may be a need of an input correction to cope with the deterioration of a resistance film with time. In that case, complicated signal processing, a calibration operation by a user, and so on may be required. On the other hand, for example, when an electromagnetic induction sensor is used as a second input device, correction may not be required upon obtaining an input value. However, when the electromagnetic induction sensor is used, a specific position indicator may be required and the input may not be carried out readily at any time.

US 2004/0104899 A1 discloses a touch panel for a display device with integrated functionality provided by resistive-type and EM-type touch panels. The touch panel is integrated with the display device and includes a resistive-type touch panel arranged above the display device and an EM-type touch panel arranged below the display device.

### Summary of the Invention

The invention provides a coordinate input apparatus, a method for determining correction information for correcting an input value, and a computer program product as defined in the independent claims. Further embodiments are described in the dependent claims.

According to an embodiment of the present invention, there is provided a coordinate input device including a first input device obtaining coordinate data as a first input value said first input device requiring an input-value correction and a second input device obtaining said coordinate data as a second input value, said second input device not requiring an input-value correction. The coordinate input device includes a determining unit configured to determine that the first input device and the second input device simultaneously obtain the first input value and the second input value, respectively. The coordinate input device also includes a storing unit configured to store a relationship between the simultaneously obtained first input value from the first input device and second input value from the second input device as correction information. The coordinate input device further includes a correcting unit configured to correct coordinate data corresponding to the first input value on the basis of the correction information.

According to an embodiment of the coordinate input device, the second input value from the second input device is the correction information for the first input value from the first input device.

According to an embodiment of the coordinate input device, the correction information is a parameter value when the first input value is calculated from a value obtained from the first input device.

According to an embodiment of the coordinate input device, the correction information is a difference value between the first input value from the first input device and the second input value from the second input device.

An embodiment of the coordinate input device further includes a position indicator capable of simultaneous input, in which instructions to input the first input value and the second input value indicated by the position indicator within a range corresponding to predetermined areas or whole areas of the first input device and the second input device are displayed on the first input device and the second input device.

An embodiment of the coordinate input device further includes a display device laid on the first input device and the second input device and the predetermined areas are displayed on the display device.

According to an embodiment of the coordinate input device, the correction information at the time of simultaneously obtaining the first input value and the second input value is stored as a correction table for each coordinate of the first input value.

According to an embodiment of the coordinate input device, the correction table includes a first correction table used for correcting the first input value from the first input device and a second correction table for storing the difference information for each coordinate of the first input value. The information stored in the second correction table is overwritten on the first correction table at a given timing.

According to an embodiment of the coordinate input device, the parameter value includes a first parameter value used for correcting the first input value from the first input device and a second parameter value stored each time the first input device and the second input device simultaneously obtain the first input value and the second input value. The second parameter value is overwritten on the first parameter value at a given timing.

According to an embodiment of the coordinate input device, the given timing is extracted by detecting a timing with an incorporated clock or an instruction of a user or a system startup.

According to an embodiment of the coordinate input device, the first input device is a pressure-sensitive sensor and the second input device is an electromagnetic-induction sensor.

According to an embodiment of the coordinate input device, the first input value is detected by the pressure-sensitive sensor simultaneously with a detection of the second input value by the electromagnetic-induction sensor. An output of the electromagnetic-induction sensor is compared with an output of the pressure-sensitive sensor to obtain the correction information.

The coordinate input device as described in any of the embodiments has an advantage in that a first input value requiring a correction can be automatically or semi-automatically corrected by a simplified method.

According to an embodiment of the present invention, there is provided a method for determining correction information for correcting an input value. The input value is input into a coordinate input apparatus. The method comprise obtaining coordinate data as a first input value from a first input device that requires an input-value correction. The coordinate data is obtained as a second input value from a second input device that does not require an input-value correction.

It is determined that the first input value and the second input value are simultaneously obtained. A relationship between the simultaneously obtained first input value and second input value is stored as correction information, and coordinate data corresponding to the first input value is corrected on the basis of the correction information.

In another aspect, there is provided a computer program product comprising computer readable instructions to perform a method for determining correction information for correcting an input value. The computer readable instructions may be executed on an input apparatus, or alternatively on a connected computer.

### Brief Description of the Drawings

- Fig. 1: is a schematic diagram for illustrating a touch panel.
- Fig. 2: is a schematic diagram for illustrating an electromagnetic- induction sensor.
- Fig. 3: is a block diagram illustrating a coordinate input device according to an embodiment of the present invention.
- Fig. 4: is a flowchart for explaining an operation of the coordinate input device.
- Figs. 5A and 5B: are flowcharts for explaining the operation of the coordinate input device, where FIGS. 5A and 5B represent different procedures.

### Description of the Preferred Embodiments

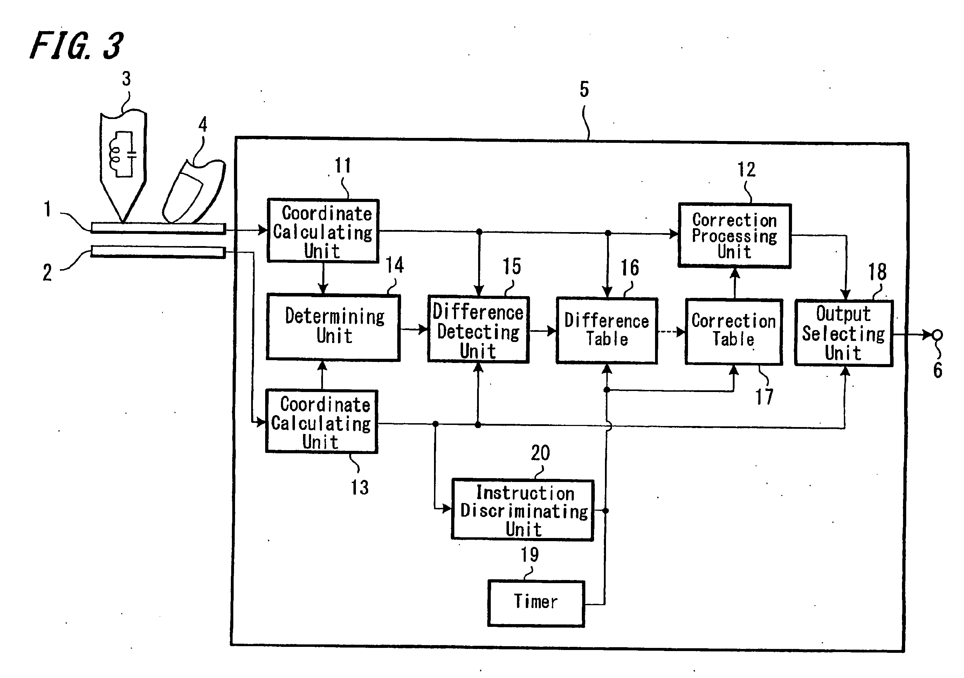

A coordinate input device according to an embodiment of the present invention will be described with reference to FIGS. 3 to 5. First, FIG. 3 is a block diagram showing a configuration of the coordinate input device according to the embodiment of the present invention.

As shown in FIG. 3, the coordinate input device of the present embodiment includes: a first input device that requires a correction for obtaining an input value, for example a touch panel (pressure-sensitive sensor) 1 as disclosed in Japanese Unexamined Patent Application Publication No. H5-250086; and a second input device that does not require correction for obtaining an input value, for example an electromagnetic induction sensor 2 disclosed in Japanese Unexamined Patent Application Publication No. H5-298007. The touch panel 1 and the electromagnetic induction sensor 2 are stacked together. The touch panel 1 may be exposed on the input side. The electromagnetic induction sensor 2 may be apart from the input side. In addition, a liquid crystal display or the like may be placed between the touch panel 1 and the electromagnetic induction sensor 2.

The touch panel 1 and the electromagnetic sensor 2 may be instructed by a position indicator 3 incorporating a resonant circuit. In this case, both the touch panel 1 and the electromagnetic induction sensor 2 can detect an indicated position. However, the electromagnetic sensor 2 detects a coordinate with accuracy compared with the touch panel 1. In contrast, when the tip of a finger 4 or the like having no resonant circuit is used to give instructions, an instructed position is only detected on the touch panel 1 but not on the electromagnetic sensor 2.

The detection with the touch panel 1 tends to cause deterioration with time. Thus, an input value supplied from the touch panel 1 to a central processing unit (CPU) 5 for coordinate calculation is converted into a coordinate at a coordinate calculating unit 11. Subsequently, the input value is supplied to a correction processing unit 12 to obtain a correct value. In contrast, an input value obtained by the electromagnetic induction sensor 2 may not require correction. Thus, an input value supplied to the CPU 5 from the electromagnetic induction sensor 2 is then supplied to the coordinate calculating unit 13 and converted into a coordinate with accuracy.

The coordinate calculating units 11, 13 respectively generate signals indicating the input. These signals are supplied to a determining unit 14 and the time both the inputs are simultaneously carried out is determined. Subsequently, a determining signal is supplied to a difference detecting unit 15 where the difference between coordinates converted from values input to the coordinate calculating units 11, 13 is detected. Then,:the difference value is supplied to a difference table 16 and then stored according to a coordinate value supplied from the coordinate calculating unit 11.

Therefore, the difference table 16 stores a difference between the coordinate value calculated at the coordinate calculating unit 11 and a correct coordinate value calculated for the coordinate value at the coordinate calculating unit 13. Subsequently, the resulting difference value stored in the difference table 16 is then stored in a correction table 17. In the correction processing unit 12, the difference value from the correction table 17 is added to or subtracted from the coordinate value calculated at the coordinate calculating unit 11. Consequently, a correction procedure can be carried out to correct the coordinate value calculated at the coordinate calculating unit 11 to be the correct coordinate value calculated at the coordinate calculating unit 13.

Subsequently, either the coordinate value corrected at the correction processing unit 12 or the coordinate value calculated at the coordinate calculating unit 13 is selected by an output selecting unit 18 and then output as a coordinate output 6. In other words, in the output selecting unit 18, the coordinate value calculated at the coordinate calculating unit 13 is selected when it is obtained. In contrast, the coordinate value corrected at the correction processing unit 12 is selected when the coordinate value calculated at the coordinate calculating unit 13 is not obtained. Consequently, a correct coordinate value is obtained at any time as the coordinate output 6 without depending on the use of the position indicator 3.

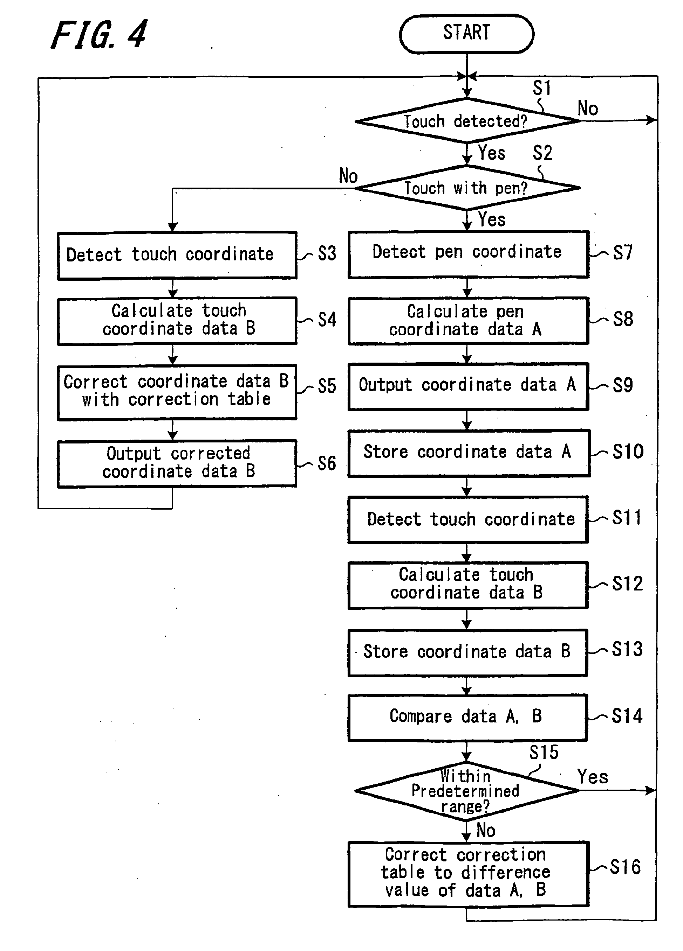

As shown in FIG. 3, functional blocks of a program executed by the CPU 5 are illustrated within the CPU 5. Next, FIG. 4 shows the steps of the program in flowchart.

As shown in FIG. 4, when the processing is started, it is determined whether the touch panel 1 or the electromagnetic induction sensor 2 is touched (Step S1). If there is no touch (NO), then the step S1 is repeated. If the touch is detected (YES), then it is determined whether the touch is carried out with a position indicator (pen) having an incorporated resonant circuit (Step S2).

In the step S2, if a pen is not used (NO), then the coordinate of touch is detected (Step S3) and touch-coordinate data B is then calculated (Step S4). Further, calculated coordinate data B is corrected using the correction table (Step S5) and the corrected coordinate data B is then output (Step S6). These steps of the processing may be similar to those carried out on a typical touch panel. Furthermore, after completing these steps, the process returns to Step S1.

On the other hand, if the pen is used in Step S2 (YES), the coordinate of the pen is detected at first (Step S7) and the pen coordinate data A is then calculated (Step S8). Further, the coordinate data A is output (Step S9) and the coordinate data A is then stored (Step S10). These steps may be the same as those carried out with a typical electromagnetic sensor. In the present embodiment, the following steps are subsequently carried out.

That is, after Step S10, the coordinate of the touch is detected (Step S11) and the touch coordinate data B is then calculated (Step S12). Further, the calculated coordinate data B is stored (Step S13) and then the stored coordinate data A, B are compared (Step S14). If the difference between the data A and B is within an allowable range (YES), then the process returns to Step S1.

On the other hand, if the difference between the data A, B is out of the allowable range (NO) in Step S14, then the correction table is revised using the difference value between the data A, B (Step S16). Then, the process returns to Step S1. Here, if the correction table stores the difference value and correction is then carried out by adding the difference value to the coordinate value detected by the touch sensor or by subtracting the difference value from the coordinate value detected by the touch sensor, then the subsequent output of the touch sensor can be corrected accordingly.

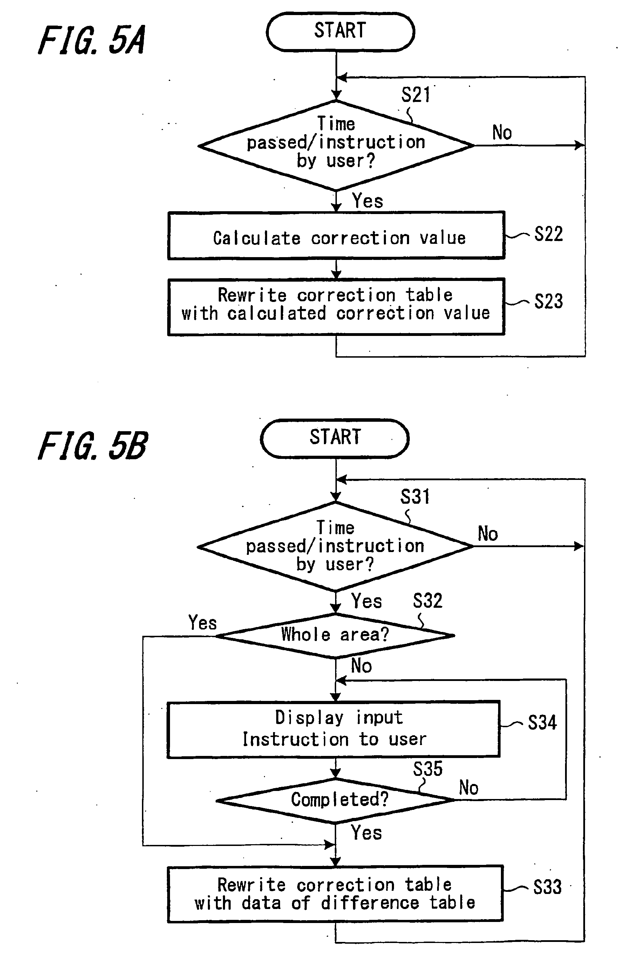

As indicated in the embodiment illustrated in FIG. 4, the correction table is immediately rewritten when the difference between the data A, B exceeds the acceptable range. However, a frequent rewrite of the memory may be undesirable. Accordingly, in the embodiment illustrated in FIG. 3, the difference table 16 is provided together with a timer 19 and an instruction discriminating unit 20 for the user. The correction table 17 is rewritten after a predetermined time having passed from the last rewrite or in accordance with the user's instruction of rewrite. FIGS. 5A and 5B respectively illustrate such procedures.

Specifically, in the flowchart shown in FIG. 5A, when the processing is started, it is determined whether a predetermined time has passed after the last rewrite of the correction table or the user issues an instruction of rewriting the correction table (Step S21). Here, if the predetermined time has not passed or there is no instruction by the user (NO), then Step S21 is repeated. On the other hand, if it is detected that the time has passed or there is an instruction by the user (YES), then a correction value is calculated using the data stored in the difference table (Step S22) and the correction table is then overwritten with the calculated correction value (Step S23).

In the flowchart illustrated in FIG. 5B, when the processing is started, it is determined whether a predetermined time has passed or the user issues an instruction in a manner similar to the determination in Step S21 (Step S31). Here, if the time has not passed or there is no instruction by the user (NO), then Step S31 is repeated. On the other hand, if it is detected that the time has passed or there is an instruction by the user (YES), then it is determined whether the data stored in the difference table is overall data (Step S32).

If the data stored in the difference table is the overall data in Step S32 (YES), the correction data stored in the difference table overwrites the correction table (Step S33). On the other hand, if the data stored in the difference table is not overall (NO), then a request for overall input with the touch panel and the electromagnetic induction sensor is displayed (Step S34).

Subsequently, it is determined whether the overall input to the touch panel and the electromagnetic sensor is completed in response to the display (Step S35). If it is not completed (NO) then Step S34 is repeated. If it is completed (YES), then the correction table is overwritten with the correction value stored in the difference table in Step S33. In this way, the correction table 17 is rewritten after a predetermined time has passed from the last rewrite of the correction table or according to the instruction of rewrite from the user.

As described above, according to the coordinate input device of the embodiment, an input value from an input device, which may require correction, can be carried out automatically or semi-automatically using a simplified method.

In the above-described embodiment, the CPU 5 for the coordinate calculation is provided together with the touch panel 1 and the electromagnetic sensor 2. Alternatively, the coordinate input device may be configured such that output signals from the touch panel 1 and the electromagnetic sensor 2 can be directly input into a personal computer (not shown) and the CUP 5 for the coordinate calculation can be provided as a driver incorporated in the personal computer.

Furthermore, in the above-described embodiment, the difference value is stored as correction information in the difference table 16 in accordance with the coordinate value from the coordinate calculation unit 11. Alternatively, for example, parameter values of an arithmetic expression for the correction at the correction processing unit 12 may be stored in advance.

An example of such parameter values will be described below.
- If true coordinate values (values obtained from the electromagnetic induction sensor 2 in the present embodiment) are (EX1, EY1), (EX2, EY2) and coordinate values to be corrected (values obtained from the touch panel 1 in the present embodiment) are (RX1, RY1), (RX2, RY2), then correction parameters in the X axis and the Y axis are as follows:
- INCL X = (EX2-EX1)/(RX2-RX1)
- INCL Y = (EY2-EY1)/(RY2-RY1)

Storing such parameter values (INCL X) (INCL Y) allows the collection of the coordinate value with the touch panel 1. Consequently, the characteristic feature of the coordinate input device according to an embodiment of the present invention is obtained such that the correction information is a parameter value used in calculation of a first input value from a value obtained from the first input device.

Furthermore, the characteristic feature of the coordinate input device according to an embodiment of the present invention is as follows. The parameter values include a first parameter value to be used in correction of a first input value from the first input device and a second parameter value stored each time the first input device and the second input device simultaneously obtain a first input value and a second input value. The second parameter is overwritten on the first parameter value at a given timing.

Furthermore, it will be appreciated that the present invention is not limited to the above embodiment and various modification examples and application examples may be made thereto without departing the gist of the present invention written in the scope of claims.

## Claims

1. A coordinate input apparatus (5)comprising:
- a first input device (1) for obtaining coordinate data as a first input value, said first input device requiring an input-value correction;
- a second input device (2) for obtaining said coordinate data as a second input value, said second input device not requiring an input-value correction;
**characterized by**
- a determining unit (14) configured to determine that the first input device and the second input device simultaneously obtain the first input value and the second input value, respectively;
- a storing unit (16, 17) configured to store a relationship between the simultaneously obtained first input value from the first input device and second input value from the second input device as correction information; and
- a correcting unit (12) configured to correct coordinate data corresponding to the first input value on the basis of the correction information.

2. A coordinate input apparatus according to claim 1, wherein
the second input value from the second input device is the correction information for the first input value from the first input device.

3. A coordinate input apparatus according to claim 1, wherein
the correction information is a parameter value determined when the first input value is calculated from a value obtained from the first input device.

4. A coordinate input apparatus according to claim 1, wherein
the correction information is a difference value between the first input value from the first input device and the second input value from the second input device.

5. A coordinate input apparatus according to claim 1, further comprising a position indicator capable of simultaneous input, wherein
instructions to input the first input value and the second input value indicated by the position indicator within a range corresponding to predetermined areas or whole areas of the first input device and the second input device are displayed on the first input device and the second input device.

6. A coordinate input apparatus according to claim 5, further comprising a display device laid on the first input device and the second input device, wherein
the predetermined areas are displayed on the display device.

7. A coordinate input apparatus according to claim 1, wherein
the correction information at the time of simultaneously obtaining the first input value and the second input value is stored as a correction table (16, 17) for each coordinate of the first input value.

8. A coordinate input apparatus according to claim 7,
wherein the correction table includes a first correction table (17) used for correcting the first input value from the first input device and a second correction table (16) for storing the difference information for each coordinate of the first input value, and
wherein the information stored in the second correction table is overwritten on the first correction table at a given timing.

9. A coordinate input apparatus according to claim 3, wherein
the parameter value includes a first parameter value used for correcting the first input value from the first input device and a second parameter value stored each time the first input device and the second input device simultaneously obtain the first input value and the second input value, and
wherein the second parameter value is overwritten on the first parameter value at a given timing.

10. A coordinate input apparatus according to claim 8, wherein
the given timing is extracted by detecting a timing with an incorporated clock (19) or an instruction of a user or a system startup.

11. A coordinate input apparatus according to claim 1,
wherein the first input device is a pressure-sensitive sensor and the second input device is an electromagnetic-induction sensor.

12. A coordinate input apparatus according to claim 11, wherein
the first input value is detected by the pressure-sensitive sensor simultaneously with a detection of the second input value by the electromagnetic-induction sensor, and
an output of the electromagnetic-induction sensor is compared with an output of the pressure-sensitive sensor to obtain the correction information.

13. A method for determining correction information for correcting an input value, the input value being input into a coordinate input apparatus, the method comprising:
- obtaining coordinate data as a first input value from a first input device that requires an input-value correction (S11);
- obtaining said coordinate data as a second input value from a second input device that does not require an input-value correction (S7);
**characterized by**
- determining that the first input value and the second input value are simultaneously obtained (S1, S2);
- storing a relationship between the simultaneously obtained first input value and second input value as correction information (S16); and
- correcting coordinate data corresponding to the first input value on the basis of the correction information (S5).

14. The method of claim 13, wherein the second input value is the correction information for the first input value.

15. The method of claim 13, wherein the correction information is a difference value between the first input value and the second input value.

16. The method of claim 13, wherein the correction information at the time of simultaneously obtaining the first input value and the second input value is stored as a correction table for each coordinate of the first input value.

17. The method of claim 16, wherein the correction table includes a first correction table used for correcting the first input value from the first input device and a second correction table for storing the difference information for each coordinate of the first input value, and
the method further comprises overwriting the information stored in the second correction table on the first correction table at a given timing.

18. The method of claim 17, further comprising extracting the given timing by detecting timing with an incorporated clock or an instruction of a user or a system startup.

19. A computer program product comprising computer readable instructions to perform a method in accordance with any one of claims 13 to 18.

## Patentansprüche

1. Koordinateneingabevorrichtung (5), umfassend:
- eine erste Eingabeeinrichtung (1) zum Erhalten von Koordinatendaten als einen ersten Eingangswert, wobei die erste Eingabeeinrichtung eine Eingangswertkorrektur erfordert;
- eine zweite Eingabeeinrichtung (2) zum Erhalten der Koordinatendaten als einen zweiten Eingangswert, wobei die zweite Eingabeeinrichtung keine Eingangswertkorrektur erfordert;
**gekennzeichnet durch**
- eine Bestimmungseinheit (14), die dafür ausgelegt ist, zu bestimmen, dass die erste Eingabeeinrichtung und die zweite Eingabeeinrichtung gleichzeitig den ersten Eingangswert bzw. den zweiten Eingangswert erhalten;
- eine Speichereinheit (16, 17), die dafür ausgelegt ist, eine Beziehung zwischen dem gleichzeitig erhaltenen ersten Eingangswert aus der ersten Eingabeeinrichtung und einem zweiten Eingangswert aus der zweiten Eingabeeinrichtung als Korrekturinformationen zu speichern; und
- eine Korrektureinheit (12), die dafür ausgelegt ist, Koordinatendaten, die dem ersten Eingangswert entsprechen, auf der Basis der Korrekturinformationen zu korrigieren.

2. Koordinateneingabevorrichtung nach Anspruch 1, wobei
es sich bei dem zweiten Eingangswert aus der zweiten Eingabeeinrichtung um die Korrekturinformationen für den ersten Eingangswert aus der ersten Eingabeeinrichtung handelt.

3. Koordinateneingabevorrichtung nach Anspruch 1, wobei
die Korrekturinformationen ein Parameterwert sind, der bestimmt wird, wenn der erste Eingangswert aus dem aus der ersten Eingabeeinrichtung erhaltenen Wert berechnet wird.

4. Koordinateneingabevorrichtung nach Anspruch 1, wobei
die Korrekturinformationen ein Differenzwert zwischen dem ersten Eingangswert aus der ersten Eingabeeinrichtung und dem zweiten Eingangswert aus der zweiten Eingabeeinrichtung sind.

5. Koordinateneingabevorrichtung nach Anspruch 1, ferner mit einem Positionsindikator, der zu gleichzeitiger Eingabe fähig ist, wobei Anweisungen zur Eingabe des ersten Eingangswerts und des zweiten Eingangswerts, die durch den Positionsindikator in einem vorbestimmten Bereichen oder gesamten Bereichen der ersten Eingabeeinrichtung und der zweiten Eingabeeinrichtung entsprechenden Bereich angegeben werden, auf der ersten Eingabeeinrichtung und der zweiten Eingabeeinrichtung angezeigt werden.

6. Koordinateneingabevorrichtung nach Anspruch 5, ferner mit einer auf die erste Eingabeeinrichtung und die zweite Eingabeeinrichtung gelegten Anzeigeeinrichtung, wobei die vorbestimmten Bereiche auf der Anzeigeeinrichtung angezeigt werden.

7. Koordinateneingabevorrichtung nach Anspruch 1, wobei
die Korrekturinformationen zum Zeitpunkt des gleichzeitigen Erhaltens des ersten Eingangswerts und des zweiten Eingangswerts als eine Korrekturtabelle (16, 17) für jede Koordinate des ersten Eingangswerts gespeichert werden.

8. Koordinateneingabevorrichtung nach Anspruch 7, wobei die Korrekturtabelle eine zum Korrigieren des ersten Eingangswerts aus der ersten Eingabeeinrichtung verwendete erste Korrekturtabelle (17) und eine zweite Korrekturtabelle (16) zum Speichern der Differenzinformationen für jede Koordinate des ersten Eingangswerts umfasst, und wobei die in der zweiten Korrekturtabelle gespeicherten Informationen mit einem gegebenen Timing auf die erste Korrekturtabelle überschrieben werden.

9. Koordinateneingabevorrichtung nach Anspruch 3, wobei
der Parameterwert einen zum Korrigieren des ersten Eingangswerts aus der ersten Eingabeeinrichtung verwendeten ersten Parameterwert und einen jedes Mal, wenn die erste Eingabeeinrichtung und die zweite Eingabeeinrichtung gleichzeitig den ersten Eingangswert und den zweiten Eingangswert erhalten, gespeicherten zweiten Parameterwert umfasst, und
wobei der zweite Parameterwert mit einem gegebenen Timing auf den ersten Parameterwert überschrieben wird.

10. Koordinateneingabevorrichtung nach Anspruch 8, wobei
das gegebene Timing durch Detektieren eines Timings mit einem integrierten Takt (19) oder einer Anweisung eines Benutzers oder einem Systemherauffahren extrahiert wird.

11. Koordinateneingabevorrichtung nach Anspruch 1, wobei die erste Eingabeeinrichtung ein druckempfindlicher Sensor ist und die zweite Eingabeeinrichtung ein elektromagnetischer Induktionssensor ist.

12. Koordinateneingabevorrichtung nach Anspruch 11, wobei
der erste Eingangswert durch den druckempfindlichen Sensor gleichzeitig mit einer Detektion des zweiten Eingangswerts durch den elektromagnetischen Induktionssensor detektiert wird und eine Ausgabe des elektromagnetischen Induktionssensors mit einer Ausgabe des druckempfindlichen Sensors verglichen wird, um die Korrekturinformationen zu erhalten.

13. Verfahren zum Bestimmen von Korrekturinformationen zum Korrigieren eines Eingangswerts wobei der Eingangswert in eine Koordinateneingabevorrichtung eingegeben wird, wobei das Verfahren die folgenden Schritte umfasst:
- Erhalten von Koordinatendaten als einen ersten Eingangswert aus einer ersten Eingabeeinrichtung, die eine Eingangswertkorrektur erfordert (S11);
- Erhalten der Koordinatendaten als einen zweiten Eingangswert aus einer zweiten Eingabeeinrichtung, die keine Eingangswertkorrektur erfordert (S7);
**gekennzeichnet durch**
- Bestimmen, dass der erste Eingangswert und der zweite Eingangswert gleichzeitig erhalten werden (S1, S2);
- Speichern einer Beziehung zwischen dem gleichzeitig erhaltenen ersten Eingangswert und zweiten Eingangswert als Korrekturinformationen (S16); und
- Korrigieren von dem ersten Eingangswert entsprechenden Koordinatendaten auf der Basis der Korrekturinformationen (S5).

14. Verfahren nach Anspruch 13, wobei es sich bei dem zweiten Eingangswert um die Korrekturinformationen für den ersten Eingangswert handelt.

15. Verfahren nach Anspruch 13, wobei die Korrekturinformationen ein Differenzwert zwischen dem ersten Eingangswert und dem zweiten Eingangswert sind.

16. Verfahren nach Anspruch 13, wobei die Korrekturinformationen zum Zeitpunkt des gleichzeitigen Erhaltens des ersten Eingangswerts und des zweiten Eingangswerts als eine Korrekturtabelle für jede Koordinate des ersten Eingangswerts gespeichert werden.

17. Verfahren nach Anspruch 16, wobei die Korrekturtabelle eine zum Korrigieren des ersten Eingangswerts aus der ersten Eingabeeinrichtung verwendete erste Korrekturtabelle und eine zweite Korrekturtabelle zum Speichern der Differenzinformationen für jede Koordinate des ersten Eingangswerts umfasst, und
das Verfahren ferner das Überschreiben der in der zweiten Korrekturtabelle gespeicherten Informationen auf die erste Korrekturtabelle mit einem gegebenen Timing umfasst.

18. Verfahren nach Anspruch 17, ferner mit dem Schritt des Extrahierens des gegebenen Timings durch Detektieren von Timing mit einem integrierten Takt oder einer Anweisung eines Benutzers oder einem Systemherauffahren.

19. Computerprogrammprodukt, das computerlesbare Anweisungen zum Ausführen eines Verfahrens nach einem der Ansprüche 13 bis 18 umfasst.

## Revendications

1. Appareil de saisie de coordonnées (5) comprenant:
- un premier dispositif de saisie (1) pour obtenir des données de coordonnées de contact tactile comme première valeur de saisie, ledit premier dispositif de saisie nécessitant une correction de la valeur de saisie ;
- un deuxième dispositif de saisie (2) pour obtenir lesdites données de coordonnées de contact tactile comme deuxième valeur de saisie, ledit deuxième dispositif de saisie ne nécessitant pas de correction de la valeur de saisie ;
**caractérisé par**
- une unité de détermination (14) configurée de façon à déterminer que le premier dispositif de saisie et le deuxième dispositif de saisie obtiennent simultanément la première valeur de saisie et la deuxième valeur de saisie, respectivement ;
- une unité de stockage (16, 17) configurée de façon à stocker comme information de correction un rapport entre la première valeur de saisie issue du premier dispositif de saisie et la deuxième valeur de saisie issue du deuxième dispositif de saisie obtenues simultanément ; et
- une unité de correction (12) configurée de façon à corriger les données de coordonnées de contact tactile correspondant à la première valeur de saisie en se basant sur l'information de correction.

2. Appareil de saisie de coordonnées selon la revendication 1, dans lequel
la deuxième valeur de saisie issue du deuxième dispositif de saisie est l'information de correction pour la première valeur de saisie issue du premier dispositif de saisie.

3. Appareil de saisie de coordonnées selon la revendication 1, dans lequel
l'information de correction est une valeur de paramètre déterminée lorsque la première valeur de saisie est calculée à partir d'une valeur obtenue du premier dispositif de saisie.

4. Appareil de saisie de coordonnées selon la revendication 1, dans lequel
l'information de correction est une valeur de différence entre la première valeur de saisie issue du premier dispositif de saisie et la deuxième valeur de saisie issue du deuxième dispositif de saisie.

5. Appareil de saisie de coordonnées selon la revendication 1, comprenant en outre un indicateur de position capable d'une saisie simultanée, dans lequel
des instructions pour saisir la première valeur de saisie et la deuxième valeur de saisie indiquées par l'indicateur de position dans les limites d'une plage correspondant à des zones prédéterminées ou des zones entières du premier dispositif de saisie et du deuxième dispositif de saisie sont affichées sur le premier dispositif de saisie et sur le deuxième dispositif de saisie.

6. Appareil de saisie de coordonnées selon la revendication 5, comprenant en outre un dispositif d'affichage posé sur le premier dispositif de saisie et sur le deuxième dispositif de saisie, dans lequel
les zones prédéterminées sont affichées sur le dispositif d'affichage.

7. Appareil de saisie de coordonnées selon la revendication 1, dans lequel
l'information de correction au moment de l'obtention simultanée de la première valeur de saisie et de la deuxième valeur de saisie est stockée comme tableau de correction (16, 17) pour chaque coordonnée de la première valeur de saisie.

8. Appareil de saisie de coordonnées selon la revendication 7,
dans lequel le tableau de correction comprend un premier tableau de correction (17) utilisé pour corriger la première valeur de saisie issue du premier dispositif de saisie et un deuxième tableau de correction (16) pour stocker l'information de différence pour chaque coordonnée de la première valeur de saisie, et
dans lequel l'information stockée dans le deuxième tableau de correction est superposée sur le premier tableau de correction à un moment donné

9. Appareil de saisie de coordonnées selon la revendication 3, dans lequel
la valeur de paramètre comprend une première valeur de paramètre utilisée pour corriger la première valeur de saisie issue du premier dispositif de saisie et une deuxième valeur de paramètre stockée chaque fois que le premier dispositif de saisie et le deuxième dispositif de saisie obtiennent simultanément la première valeur de saisie et la deuxième valeur de saisie, et
dans lequel une deuxième valeur de paramètre est superposée sur la première valeur de paramètre à un moment donné.

10. Appareil de saisie de coordonnées selon la revendication 8, dans lequel
le moment donné est extrait par la détection d'un moment avec une horloge incorporée (19) ou par une instruction d'un utilisateur ou par le démarrage d'un système.

11. Appareil de saisie de coordonnées selon la revendication 1,
dans lequel le premier dispositif de saisie est un capteur sensible à la pression et le deuxième dispositif de saisie est un capteur à induction électromagnétique.

12. Appareil de saisie de coordonnées selon la revendication 11, dans lequel
la première valeur de saisie est détectée par le capteur sensible à la pression simultanément avec une détection de la deuxième valeur de saisie par le capteur à induction électromagnétique, et
une sortie du capteur à induction électromagnétique est comparée avec une sortie du capteur sensible à la pression afin d'obtenir l'information de correction.

13. Procédé pour déterminer l'information de correction pour corriger une valeur de saisie, cette valeur de saisie étant saisie dans un appareil de saisie de coordonnées, ce procédé comprenant :
- l'obtention de données de coordonnées de contact tactile comme première valeur de saisie depuis un premier dispositif de saisie qui a besoin d'une correction de la valeur de saisie (S11) ;
- l'obtention desdites données de coordonnées de contact tactile comme deuxième valeur de saisie depuis un deuxième dispositif de saisie qui n'a pas besoin de correction de la valeur de saisie (S7) ;
**caractérisé par**
- la détermination que la première valeur de saisie et la deuxième valeur de saisie sont obtenues simultanément (S1, S2) ;
- le stockage comme information de correction d'un rapport entre la première valeur de saisie et la deuxième valeur de saisie obtenues simultanément (S16) ; et
- la correction des données de coordonnées de contact tactile correspondant à la première valeur de saisie en se basant sur l'information de correction (S5).

14. Procédé selon la revendication 13, dans lequel la deuxième valeur de saisie est l'information de correction pour la première valeur de saisie.

15. Procédé selon la revendication 13, dans lequel l'information de correction est une valeur de différence entre la première valeur de saisie et la deuxième valeur de saisie.

16. Procédé selon la revendication 13, dans lequel l'information de correction au moment de l'obtention simultanée de la première valeur de saisie et de la deuxième valeur de saisie est stockée comme tableau de correction pour chaque coordonnée de la première valeur de saisie.

17. Procédé selon la revendication 16, dans lequel le tableau de correction comprend un premier tableau de correction utilisé pour corriger la première valeur de saisie issue du premier dispositif de saisie et un deuxième tableau de correction pour stocker l'information de différence pour chaque coordonnée de la première valeur de saisie, et
ce procédé comprend en outre la superposition de l'information stockée dans le deuxième tableau de correction sur le premier tableau de correction à un moment donné.

18. Procédé selon la revendication 17, comprenant en outre l'extraction du moment donné par la détection d'un moment avec une horloge incorporée ou par une instruction d'un utilisateur ou le démarrage d'un système.

19. Produit programme informatique comprenant des instructions lisibles par ordinateur pour exécuter un procédé selon l'une quelconque des revendications 13 à 18.
